# EUROPÄISCHE PATENTANMELDUNG

(11) **EP 1 418 070 A1**
(43) Veröffentlichungstag der Anmeldung: **12.05.2004**
(21) Anmeldenummer: 03024221.8
(22) Anmeldetag: 22.10.2003
(51) Int. Cl.: B60H 1/00

(54) **Vorrichtung zum Verstellen einer Klappe für Heizungs-, Lüftungs-und Klimaanlagen**

(30) Priorität: 09.11.2002 DE 10252182
(71) Anmelder: GearCon GmbH, 72070 Tübingen (DE)
(72) Erfinder: Saysette-Rasmussen, Frank, 5300 Kerteminde (DK); Breuninger, Steffen, 72070 Tübingen (DE)
(74) Vertreter: Möbus, Daniela, Dr.-Ing.

(57) **Zusammenfassung**

Bei einer Vorrichtung zum Verstellen einer Klappe (10) für Heizungs-, Lüftungs- und Klimaanlagen, insbesondere für Kraftfahrzeuge, weist der außerhalb der Klappe (10) befestigte Stellantrieb (13) ein Wenigzahngetriebe (16) auf, d.h. ein Getriebe, dessen Antriebsritzel maximal 6 Zähne aufweist.

## Beschreibung

Die Erfindung betrifft eine Vorrichtung zum Verstellen einer Klappe für Heizungs-, Lüftungs- und Klimaanlagen, insbesondere für Kraftfahrzeuge, mit einem außerhalb der Klappe befestigten Stellantrieb.

Eine derartige Vorrichtung ist beispielsweise durch die DE 196 20 749 C2 bekannt geworden.

Bei dieser bekannten Vorrichtung ist die Verstellklappe in einem Luftzuführkanal drehbar gelagert und mittels eines Elektromotors verstellbar. Das Gehäuse des Elektromotors ist in eine den Luftzuführkanal begrenzende Gehäusewandung fest eingebaut, während die Motorwelle drehfest mit der Verstellklappe verbunden ist. Eine wichtige Anforderung an Stellantriebe von Klima-, Lüftungsoder Heizungsanlagen ist, dass sie äußerst geräuscharm arbeiten müssen. Denn der Klimakomfort soll nicht auf Kosten des Geräuschkomforts erreicht werden.

Aus der EP 0 681 359 A1 ist ein Antrieb bekannt, bei dem die Antriebswelle eine Antriebsschnecke aufweist, die mit einem Schneckenrad des Getriebes in Eingriff steht. Dieser Antrieb ist leise und baut flach, sodass der Einbauraum so klein wie möglich gehalten werden kann. Der Antrieb weist außerdem eine hohe Untersetzung auf. Allerdings ist der Wirkungsgrad relativ gering, sodass recht große Motoren benötigt werden, wodurch sich insgesamt dennoch große Einbauräume ergeben.

Dadurch lässt sich der Komfort von Klimasystemen, der sich u. a. durch Erhöhung der Anzahl der Luftkanäle und die damit verbundene Erhöhung an Stellklappen erzielen lässt, nur sehr eingeschränkt verbessern. Diese Verbesserung muss nach dem Stand der Technik durch Bauraumreduzierung des Klimagerätekörpers und die damit verbundenen Wirkungsgradverluste erkauft werden.

Der vorliegenden Erfindung liegt daher die Aufgabe zugrunde, eine Vorrichtung der eingangs genannten Art zu entwickeln, die einen kleineren Einbauraum aufweist, geräuscharm arbeitet und die gleiche Leistung bringt, um damit die gewünschte Komforterhöhung von Klimasystemen ohne die genannten Nachteile zu erreichen.

Diese Aufgabe wird erfindungsgemäß dadurch gelöst, dass der Stellantrieb ein Wenigzahngetriebe aufweist. Wenigzahngetriebe weisen einen hohen Wirkungsgrad im Vergleich zu einem Schneckenantrieb auf. Dadurch kann ein kleinerer Antriebsmotor gewählt werden. Das Wenigzahngetriebe kann einstufig oder mehrstufig sein. Dabei ergeben sich besonders geräuscharme Antriebslösungen, wenn mindestens ein Antriebsritzel des Getriebes zwei bis maximal 6 Zähne aufweist.

Die Vorrichtung kann bevorzugt achsparallel oder koaxial zur Klappe angeordnet sein und mindestens ein schräg verzahntes Antriebsritzel aufweisen, das mit mindestens einem Zahnrad in Eingriff steht.

Bei bevorzugten Ausführungsformen der Erfindung ist das Wenigzahngetriebe als Wolfrom-Getriebe mit mindestens einem Hohlrad mit unterschiedlicher Zähnezahl ausgebildet. Wolfrom-Getriebe mit niedriger Zähnezahl zeichnen sich durch ein hohes Untersetzungsverhältnis aus.

Eine andere Möglichkeit besteht darin, das Wenigzahngetriebe als mehrstufiges Planetengetriebe mit mindestens einem Sonnenrad mit ein bis vier Zähnen oder als paralleles Stirnradgetriebe mit mindestens einem Antriebsritzel mit ein bis vier Zähnen auszubilden. Auch solche Planetengetriebe sind ausgesprochen geräuscharm.

Vorzugsweise ist das Antriebsritzel des Wenigzahngetriebes als ein- oder mehrfache Schraube ausgebildet.

Als Antriebsmotor lassen sich ebenfalls verschiedene Motortypen einsetzen. So können beispielsweise Schrittmotoren, AC/DC-Motoren, Servomotoren, Piezo-Motoren, Penny-Motoren, elektronisch kommutierte Motoren, insbesondere elektronisch kommutierte Reluktanzmotoren oder Plus-Motoren eingesetzt werden.

Bei Verwendung kleiner Motoren in Verbindung mit den oben erwähnten Getriebetypen ergibt sich insgesamt ein sehr klein bauender Stellantrieb, der geräuscharm arbeitet und die erforderlichen Leistungsmerkmale aufweist. Wesentlicher Punkt ist hierbei das Vorsehen nur weniger Zähne an den Sonnenrädern. Damit können mit wenigen Getriebestufen die erforderlichen Übersetzungsverhältnisse und damit die erforderlichen Drehmomente geräuscharm erzeugt werden. Wenige Getriebestufen bedeuten außerdem einen kleinen Einbauraum.

Weitere Vorteile und Merkmale der Erfindung ergeben sich aus der Beschreibung und der Zeichnung. Ebenso können die vorstehend genannten und die noch weiter aufgeführten Merkmale je für sich oder zu mehreren in beliebiger Kombination Verwendung finden. Die gezeigten und beschriebenen Ausführungsformen sind nicht als abschließende Aufzählung zu verstehen, sondern haben vielmehr beispielhaften Charakter für die Schilderung der Erfindung. Nachfolgend werden bevorzugte Ausführungsbeispiele der Erfindung anhand der Zeichnungen näher beschrieben.

Es zeigen:
- Fig. 1: die erfindungsgemäße Vorrichtung mit einem Stellantrieb für die Verstellklappe;
- Fig. 2: ein Wenigzahngetriebe eines Stellantriebs für eine Verstellklappe in einer Detailansicht gemäß II in Fig. 1;
- Fig. 3: einen Querschnitt durch ein Planetengetriebe eines Stellantriebs einer Verstellklappe;
- Fig. 4: einen Querschnitt durch ein zweistufiges Planetengetriebe eines Stellantriebs für eine Verstellklappe;
- Fig. 5: einen Querschnitt durch ein zweistufiges Planetengetriebe mit Sonnen- und Hohlrad eines Stellantriebs einer Verstellklappe;
- Fig. 6: eine perspektivische Ansicht eines weiteren zweistufigen Stirnradgetriebes eines Stellantriebs einer Verstellklappe;
- Fig. 7a, b: Querschnitte durch zwei Wolfrom-Getriebe eines Stellantriebs einer Verstellklappe;
- Fig. 8: einen Querschnitt durch ein weiteres Wolfrom-Getriebe eines Stellantriebs für eine Verstellklappe.

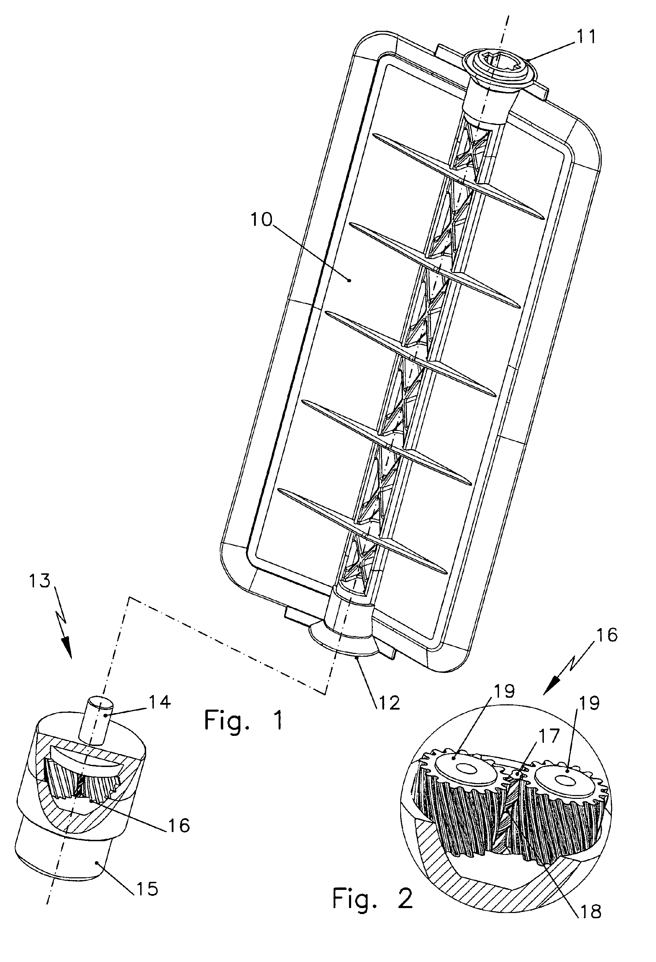

**Fig. 1** zeigt eine Vorrichtung zum Verstellen der Verstellklappe **10** einer nicht weiter dargestellten Heizungs-, Lüftungs- oder Klimaanlage. Die Verstellklappe 10 ist über Lager **11, 12** in einem Luftzuführkanal (nicht gezeigt) drehbar gelagert und mittels eines außerhalb der Klappe 10 befestigten Stellantriebs **13** verstellbar, dessen Abtriebswelle **14** koaxial zur Verstellklappe 10 angeordnet und drehfest mit ihr verbunden ist. Der Stellantrieb 13 umfasst einen Motor **15** sowie ein Getriebe **16**, dessen Antriebswelle das Wenigzahngetriebe bildet.

In **Fig. 2** ist das Wenigzahngetriebe 16 als einfaches Planetengetriebe gezeigt, dessen vom Motor 15 angetriebenes schraubenförmiges Antriebsritzel **17** zwei Zähne **18** aufweist. Die Antriebswelle 17 wirkt mit zwei Planetenrädern **19** zusammen, welche die Antriebswelle 14 antreiben.

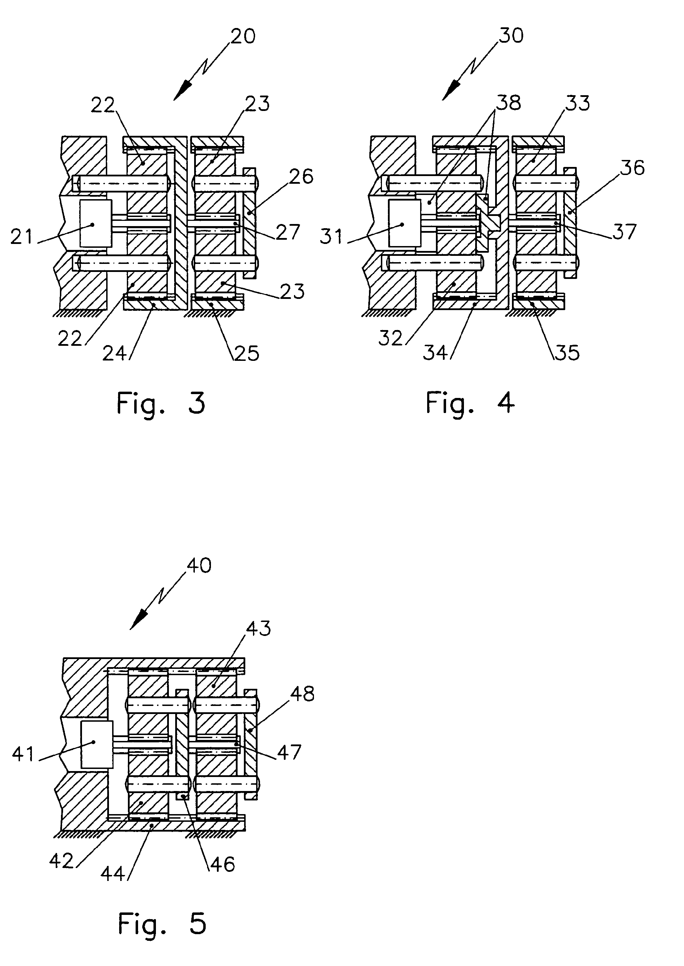

Die Figuren 3 bis 8 zeigen nun verschiedene Möglichkeiten der Ausgestaltung eines Wenigzahngetriebes für den Stellantrieb 13, die sich alle durch eine hohe Leistungsdichte und eine äußerst geringe Geräuschentwicklung auszeichnen.

**Fig. 3** zeigt ein zweistufiges Planetengetriebe **20**, das ein Sonnenrad **21** und Planetenräder **22, 23** aufweist. Die Planetenräder 22 der ersten Stufe sind dabei in einem Hohlrad **24** angeordnet, das fest mit dem Sonnenrad **27** verbunden ist. Das Sonnenrad 21 weist zwei, drei oder vier Zähne auf. Die Planetenräder 22, die vom Sonnenrad 21 angetrieben werden, rotieren gehäusefest um ihre eigene Achse und treiben das Hohlrad 24 an. Auch die Planetenräder 23, die vom Sonnenrad 21 angetrieben werden, laufen in einem Hohlrad **25** um, wobei dieses nach Fig. 3 mit dem Gehäuse des Stellantriebs fest verbunden ist, was durch die Schraffur angedeutet ist. Dies bedeutet, dass bei der Getriebevariante aus Fig. 3 der Abtrieb über den Steg 26 erfolgt.

**Fig. 4** zeigt ein zweistufiges Planetengetriebe **30**, das im Prinzip dem Planetengetriebe 20 aus Fig. 3 entspricht, mit dem Unterschied, dass hier das Hohlrad **34** in einem gehäusefesten Lager **38** geführt ist. Ein Sonnenrad 37 treibt die Planetenräder **33** an. Das Hohlrad **35** ist gehäusefest, wodurch der Abtrieb über einen Steg **36** erfolgt.

**Fig. 5** zeigt ein zweistufiges Planetengetriebe **40** mit einem Sonnenrad **41**, das sehr wenige Zähne, beispielsweise zwei, drei oder vier Zähne, aufweist. Beim Getriebe 40 nach Fig. 5 ist ein Hohlrad **44** vorgesehen, das fest mit dem Gehäuse des Stellantriebs verbunden ist. Die Planetenräder **42** treiben beim Getriebe 40 über einen Steg **46** ein Ritzel **47** an, das mit dem Steg 46 fest verbunden ist. Dieses Ritzel **47** treibt zwei weitere Planetenräder **43** an, die ihrerseits einen Steg **48** antreiben, der gleichzeitig der Abtrieb ist.

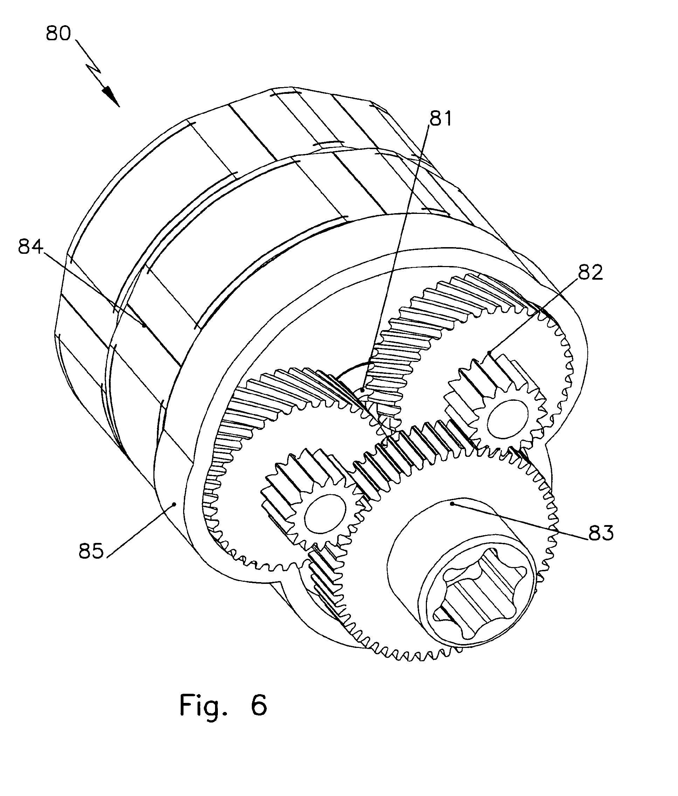

In **Fig. 6** ist eine Variante eines zweistufigen parallelen Stirnradgetriebes 80 gezeigt. Der Stellantrieb 80 umfasst einen Motor 84 und ein damit verbundenes Gehäuse 85 . Gehäusedeckel sind hier nicht gezeigt. Ein Sonnenrad 81 mit zwei, drei oder vier Zähnen treibt ein oder zwei (hier zwei gezeigt) gehäusefest gelagerte, gestufte Stirnräder 82 an. Die Stirnräder 82, die auch zwei bis vier Zähne aufweisen können, treiben das Abtriebsstirnrad 83 an.

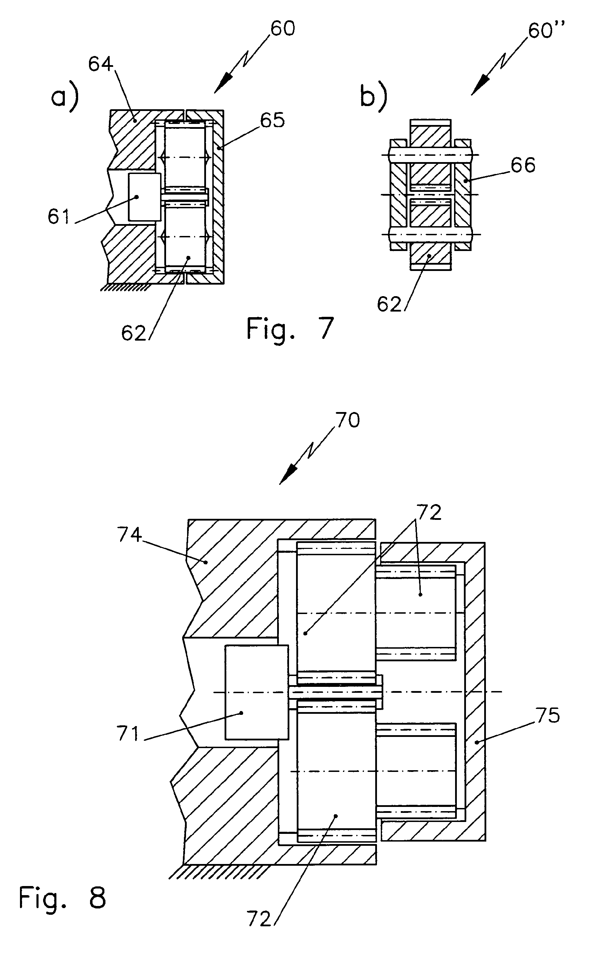

In **Fig. 7a** ist ein Getriebe **60** nach dem Wolfrom-Prinzip gezeigt. Das Getriebe 60 weist zwei Hohlräder **64** und **65** auf. Eines davon, im Beispiel nach Fig. 7 das Hohlrad 65, ist das Abtriebsrad. Die Hohlräder 64 und 65 weisen vorzugsweise eine Zähnezahldifferenz von mindestens 1 auf. Die Planetenräder **62,** die von einem Sonnenrad **61** mit zwei bis vier Zähnen angetrieben sind, weisen die gleiche Zähnezahl auf. Der Steg 60" in Fig. 7b zeigt, dass die Planetenräder **62** auch durch einen Käfig **66** positioniert werden können.

**Fig. 8** zeigt ein weiteres Wolfrom-Getriebe **70** mit zwei Hohlrädern **74** und **75** unterschiedlichen Durchmessers und unterschiedlicher Zähnezahl. Ein Sonnenrad **71** mit zwei bis vier Zähnen treibt zwei gestufte Planetenräder **72** an. Das Hohlrad 75 ist das Abtriebsrad, das Hohlrad 74 ist gehäusefest.

## Patentansprüche

1. Vorrichtung zum Verstellen einer Klappe (10) für Heizungs-, Lüftungsund Klimaanlagen, insbesondere für Kraftfahrzeuge, mit einem außerhalb der Klappe (10) befestigten Stellantrieb (13),
**dadurch gekennzeichnet,**
**dass** der Stellantrieb (13) ein Wenigzahngetriebe (16) aufweist.

2. Vorrichtung nach Anspruch 1, **dadurch gekennzeichnet, dass** das Wenigzahngetriebe (16) einstufig oder mehrstufig ist, wobei mindestens ein Antriebsritzel (17) des Wenigzahngetriebes (16) zwei bis maximal sechs Zähne (18) aufweist.

3. Vorrichtung nach Anspruch 1 oder 2, **dadurch gekennzeichnet, dass** sie achsparallel zur Klappe (10) angeordnet ist und mindestens ein schräg verzahntes Antriebsritzel, das mit mindestens einem schräg verzahnten Zahnrad in Eingriff steht, aufweist.

4. Vorrichtung nach einem der Ansprüche 1 bis 3, **dadurch gekennzeichnet, dass** das Wenigzahngetriebe (16) als Wolfrom-Getriebe (60, 70) mit mindestens einem Hohlrad (64, 65, 74, 75) mit unterschiedlicher Zähnezahl ausgebildet ist.

5. Vorrichtung nach Anspruch 4, **dadurch gekennzeichnet, dass** das Wolfrom-Getriebe (60, 60', 70) zwei Planetenräder (62, 72) aufweist.

6. Vorrichtung nach einem der Ansprüche 1 bis 3, **dadurch gekennzeichnet, dass** das Wenigzahngetriebe (16) als mehrstufiges Planetengetriebe (20, 30, 40) mit mindestens einem Sonnenrad (21, 31, 41, 27, 37, 47) mit ein, zwei, drei oder vier Zähnen ausgebildet ist.

7. Vorrichtung nach einem der Ansprüche 1 bis 6, **dadurch gekennzeichnet, dass** das Antriebsritzel (17) des Wenigzahngetriebe (16) als ein- oder mehrfache Schraube ausgebildet ist.

8. Vorrichtung nach einem der Ansprüche 1 bis 7, **dadurch gekennzeichnet, dass** ein mit dem Wenigzahngetriebe (16) zusammenwirkender Motor (15) ein Schrittmotor, ein AC/DC-Motor, ein Servomotor, ein Piezomotor, ein Penny-Motor, ein elektronisch kommutierter Motor, insbesondere ein elektronisch kommutierter Reluktanzmotor, oder ein Plus-Motor ist.
